# EUROPEAN PATENT APPLICATION

(11) **EP 1 159 991 A2**
(43) Date of publication of application: **05.12.2001**
(21) Application number: 01304639.6
(22) Date of filing: 25.05.2001
(51) Int. Cl.: A63F 13/02

(54) **Game card and game system using a game machine**

(30) Priority: 29.05.2000 JP 2000158754
(71) Applicant: Nintendo Co., Limited, Kyoto-shi, Kyoto (JP); Creatures Inc., Chuo-ku, Tokyo 103-0027 (JP)
(72) Inventor: Ishihara, Tsunekazu, Chuo-ku, Tokyo (JP); Tanimura, Masayoshi c/o Hal Laboratory Inc., Nakakoma-gun, Yamanashi (JP)
(74) Representative: Perkins, Sarah

(57) **Abstract**

A game system (10) includes a plurality of game cards (30), a game cartridge (40) and a game machine (20). Each game card (30) is visually recognizably printed with a figure (32) and ability data (33) of a character, and mechanically readably records an identification code and individuality expressing data of the character (34). The game information storage medium (40) stores a game program to appear at least part of characters of the game cards in an image display game. The game machine (20) receives therein the game information storage medium (40). The game machine (20) includes a CPU (21) to execute a game program for an image display game. The game information storage medium (40) is provided with date reader (45) to read out the identification data and individuality expressing data of the character recorded on the game card (30). The CPU (21), when supplied with the identification data and individuality expressing data from the reader (45), adds the individuality expressing data to the game program thereby executing a game process for the image display game.

## Description

This invention relates to a game system using game cards, game cards to be used for same, and a game information storage medium to be used for same. More particularly, the invention relates to a game system capable of playing with association of an electronic or video game with game cards by a combination of game cards and a game information storage medium storing a game program related to the characters recorded on the game cards, and to game cards or collection cards to be used in such game system and a game information storage medium.

### Description of the prior art

Conventionally, there is known Japanese Patent Publication No. 30475/1993 (issued on May 10, 1993) as a card-game toy using a combination of an electronic game machine and barcode-recorded cards. This card-game toy is called BARCODE BATTLER as a product name. This game utilizes the numeric data recorded as barcodes on the cards so that the card used by the offensive player is allowed to battle against the card used by the defensive player, thereby enabling competition for superiority or inferiority in barcode-recorded numeric data. The card used in the card game toy has barcode (so-called one-dimensional barcode) data configured by a combination of two kinds of bars different in thickness arranged in a predetermined number in a reading direction (horizontal direction). The barcodes are optically read out and used for the electronic game.

The conventional card-game toy, despite depicted with the figures of characters etc. on the cards, is less related in respect of electronic or video game content to the cards. Because of insufficient amount of data recorded on the barcode, the electronic game using the barcode data is liable to be monotonous and lost interest, thus making impossible to realize an interesting game. This is because of having nothing more than playing a battle using only the data recorded on the cards and hence less amusement of the game with only the cards. Because of insufficient amount of data recorded on the barcode, battle game only is possible between the offender and the defender, thus making short of game nature featuring the electronic game.

Therefore, it is an object of the present invention to provide a game system using game cards that, by use of game cards singly playable for card game, an electronic game associated with such game cards (interactive game) can be played interestingly and tirelessly for the player thus offering enjoyment over a long term, and to provide game cards to be used for same or a game information storage medium to be used for same.

Another object of the invention is to provide a game system using game cards that any game is possible for the player to play interestingly and tirelessly of a single game with only game cards or by only an electronic game and a combined game of game cards and an electronic game thus offering enjoyment over a long term, and to provide game cards to be used for same or a game information storage medium to be used for same.

Still another object of the invention is to provide game cards recording or storing a great information amount of data for representing individualities of characters (e.g. sound data, dot data (graphic data) or text data explaining the features of the characters, etc.) recorded in the cards by printing or so, and to provide a game system using such game cards.

Yet another object of the invention is to provide a game system using game cards capable of realizing various games using game cards recording and storing a great information amount of data for representing individualities of characters (e.g. sound data, dot data (image data) or text data explaining the features of the characters, etc.) recorded in the cards by printing or so, and to provide game cards to be used for same or a game information storage medium to be used for same.

A further object of the invention is to provide a game system using game cards that a particular character not included in the characters appearing in an electronic game can be stored in a collection card or game card so that the particular character inputted from the collection card can be used in game play thereby providing enjoyment of a game differently from the inherent electronic game or video game by use of the character unique to the player, and to provide game cards to be used for same or a game information storage medium to be used for same.

Another object of the invention is to provide a game system using game cards that various ones of data, such as character identification codes, individuality expressing data (ability data, sound data, text data for explaining features or text translation data thereof), additional data and control data, are optically, readably recorded by a two-dimensional barcode scheme, to combine an electronic game with game cards by use of inexpensive game cards recording a great deal of data, and to provide game cards to be used for same or a game information storage medium to be used for same.

The invention of a game system using game cards in the present application (first invention) is structured by including a plurality of game cards each visually recognizably printed with a character figure and ability data and to be used for a card game, a game information storage medium storing a game program to appear at least part of the characters in the game cards, and a game machine including processing means for receiving therein the game information storage medium to execute an image display game. The plurality of game cards mechanically readably records or stores (hereinafter, these terms may be used separately in a exact meaning depending on the kind of a medium for recording or storing data while any one term may be used in a representing form), for each of the characters depicted with figures, at least identification codes of the characters and individuality expressing data for expressing an individuality of the character. External information reading means is provided in any one of the game information storage medium and the game machine, for example, to optically, electrically or magnetically read in accordance with a mechanically readable storage form recorded or stored in the game card. A game information storage medium is a fixed memory or non-volatile memory for storing the game program in a fixed or non-volatile fashion.

Due to this, the external information reading means, when the record or storage data of the game card is placed in a readable state, reads out the character individuality expressing data recorded or stored in the game card. The processing means, when supplied with the identification code and individuality expressing data read out of the external information reading means, adds the individuality expressing data to the game program stored in the game information storage medium thereby executing a game process.

The invention of game cards of the present application (second invention) is game cards to be used in a game system structured by a game information storage medium storing a game program to appear the characters depicted in part of a plurality of game cards in an image display game, a game machine including a processing means for receiving therein the game information storage medium to execute an image display game, and external information reading means provided in any of the game information storage medium and the game machine to read out the data recorded or stored in the game card.

These game cards are for playing a card game using the cards. A character figure and ability data is printed on one surface. At least an identification code of the character and the individuality expressing data for expressing an individuality of the character are mechanically readably recorded in each card depicted with a different character figure. The individuality expressing data is read out by the external information reading means and used in a game on the game machine.

The invention of a game information storage medium of the present application (third invention) is a game information storage medium to be used in a game system structured by a plurality of game cards each visually recognizably printed with a character figure and ability data (or attribute data) and to be used for a card game, a game machine including processing means for receiving therein a game information storage medium to execute an image display game, and external information reading means provided in any of the game information storage medium and the game machine to read out the data recorded in the game card. The game cards mechanically readably record or store, for each figure-depicted character, at least an information code of the character and the individuality expressing data for expressing an individuality of the character.

The game information storage medium stores a first game program for executing a game to appear characters depicted in at least part of the game cards to enable an image display game separately from a game by the game cards, and a second program for executing a game added with the individuality expressing data to the first game program when supplied with the identification code and individuality expressing data read out of the external information reading means.

Due to this, the processing means executes the first game program when the external information reading means has not read the recorded or stored data in the game card, and second game program when the recorded data in the game card is read out and inputted.

Thus, a combined game of an electronic game or video game with the game cards is made possible to play.

According to the first invention, an associated game of an electronic game with the game cards (or interactive game) can be played using the game cards to be independently played for a card game. Thus a game system using game card is obtained that is interesting, tireless for the player and enjoyable over a long term. Meanwhile, it is possible to enjoy a single game with only the game cards or only the electronic game or a combined game of the game cards and the electronic game.

According to the second invention, it is possible to enjoy an interactive game associated with an electronic game or video game, thus providing game cards enhanced in interest of an electronic game and enjoyable over a long term. Also, game cards are obtained having a great information amount of data recorded or stored in the game card and recording or storing the data for representing the individualities the characters recorded in the cards by printing or so (e.g. sound data, dot data (image data) or text data explaining the features of the characters, etc.).

According to the third invention, it is possible to enjoy an interactive game associated of the game cards with an electronic game or video game. A game information storage medium is obtained that is enhanced in interest of an electronic game and enjoyable over a long term. Also, a game information storage medium is obtained that a combined game not to be realized only by an electronic game or video game can be enjoyed using the game cards having a great information amount of data recorded or stored in the game cards and recording the data for representing the individuality of the characters recorded in the cards by printing or so (e.g. sound data, dot data (image data) or text data explaining the features of the characters, etc.).

According these inventions, various games are feasible by the use of the game cards having a great information amount of data recorded or stored in the game cards and recording, for example, sound data of characters in the cards by printing or so, the dot data (image data) or the data for representing the individualities of the text data or the like explaining the features of the characters. Also, a particular character not existed in the characters appearing in the electronic game can be recorded in a collection card or game card so that a game can be played using the particular character inputted from the collection card. It is possible to obtain a game system using the game cards capable of enjoying a game using a character unique to the player differently from the inherent electronic game or video game, and game cards using for same or a game information storage medium to be used for same.

Furthermore, according to these invention, it is possible to obtain a game system using game cards combined with an electronic game with game cards by use of inexpensive game cards optically readably recording various data such as character identification codes, individuality expressing data (ability data, sound data, text data of texts explaining the features or translation data of the texts), additional data and control data by a two-dimensional barcode scheme to have a great deal of data record, and game cards to be used for same and a game information storage medium to be used for same.

The above described objects and other objects, features, aspects and advantages of the present invention will become more apparent from the following detailed description of the present invention when taken in conjunction with the accompanying drawings.
Figure 1 is a principle block diagram for explaining the principle of the present invention;
Figure 2 is an external view of an embodiment of the invention;
Figure 3 is a block diagram of an embodiment of the invention;
Figure 4 is a detailed plan view of an example of a game card, showing an example of optically readably recording individuality expressing data;
Figure 5 is a flowchart for explaining an example of the operation of a card reader 45 and read-data processing circuit 44; and
Figure 6 is a flowchart showing an example of game processing.

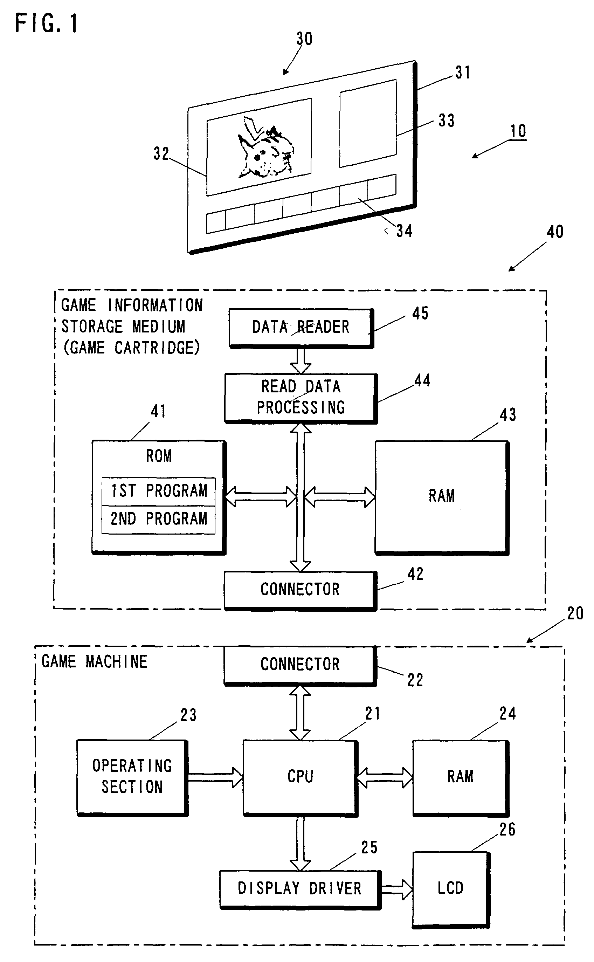

Figure 1 is a principle block diagram for explaining the principle of the present invention. In Figure 1, a game system 10 using game cards of the invention is configured by an electronic game machine such as a portable game machine or video game machine (hereinafter, collectively referred to as "game machine") 20, game cards 40, and a game cartridge as an example of a game information storage medium (hereinafter, briefly referred to as "cartridge") 40. The game machine 20 includes a CPU 21 as an example of processing means. The CPU 21 is connected with a connector 22 for removably receiving the game cartridge 40, an operating section 23, a RAM 24 for temporarily, writably/readably storing data and a display drive circuit 25. The display drive circuit 25 is connected with a liquid crystal display (LCD) 26. Incidentally, where the game machine 20 is a video game machine, a TV monitor (not shown) is connected in place of the LCD 26 and a video signal generating circuit (not shown) is provided in place of the display drive circuit 25 to thereby convert image display data into video signals (video signals or RGB signals).

The game card 30 is formed, on one main surface of the card 31, with an illustration display area 32, an ability data recording area 33, and an information recording area 34 for recording individuality expressing data. Where the game card 30 is in a vertically-long rectangular for example, the illustration display area 32 is formed in a most conspicuous upper region (upper half) or in a region somewhat broader than the upper half, to depict therein various characters such as animals, humans or imaginary monsters by printing. The character depicted in the illustration display area 31 is a character different in kind, design or figure on a card-by-card basis in order to represent a feature of the card, including a character that will appear on a game screen upon executing the game program (such as hero character, ally or enemy characters or to-be-collected characters). Concerning such characters, it is preferred to put on sale a combination of a multiplicity of cards (e.g. 30 to 40 cards) (called "Starter Kit") or on sale packaged with the game cartridge 40 so that such novel or pretty characters as to be collected by a collector can be included at an certain probability. Separately from such set sale on a many-card basis, there would be cases of set sale on a reduced-number-of-cards basis (called "extension pack").

Meanwhile, the ability data recording area 33 is an area for displaying in letters, symbols, numerals or their combinations ability data (may be referred to as attribute data) of a character being depicted in the illustration display area 32. For example, visually (visually recognizably) printed with data including a character name, a character No., letters or symbols representing weapons or magics to be used by the character, physical strength, power, hit point, offensive power, defensive power, etc. together with the numerals representative of the amount, and other kinds of data. The ability data recording area 33 is printed with a symbol representative of a degree of rarity value of a game card 20 depicting the character (rareness mark).

The information recording area 34 is formed in a modest way along at least one side of the game card 30. The information recording area 34 may be formed along the opposite two sides in a region excepting the illustration display area 32 and ability data recording area 33 of the game card 30 as required, or along three or four sides surrounding the illustration display area 32 and ability data recording area 33. The individuality expressing data to be recorded or stored is, for example, the discrimination codes of the characters recorded in the ability data recording area 33, or the data same as the ability data such as letter (or text) data of words or texts explaining the tricks, weapons or features to be used in the game, or the additional data (e.g. sound data, dot data representing character figures or graphic data). The ability data and additional data are the data to be properly selected depending upon a game content. The additional data includes voices for the character being a human, sound data such as crises for animals or imaginary monsters, and additional ability data other than the ability data recorded in a visualizing form (concealed ability data concerning the items capable of using magics or turning into an unrivaled state in a certain time).

For example, where the game is concerned in content with an imaginary monster capturing or raising game, the character to be depicted in the illustration display area 32 may be a monster, wherein the individuality expressing data to be recorded or stored in the information recording area 34 (ability data and/or additional data) be trick data on a monster-by-monster basis, sound data of cries, evolution-related data, explanatory texts of words or texts to explain the feature of a monster (letter of text data), translation data of such explanatory texts and so on. Meanwhile where the game content is a sport game such as baseball or soccer, the character may be an athlete picture (baseball or soccer) and the individuality expressing data be pictured-athlete's team name player's number, age and score data (in baseball, for a batter a batting ave. home-run count, r.b.i, stolen bases, running power, etc. and for a pitcher an earned run ave, strike-outs, self-approach point, etc. and for soccer, physical ability, score point, assist count, etc.). Where the game content concerns a role-playing game or action game, the character may be an game-appearing person, animal or imaginary animal or plant while the individuality expressing data is appearing-person's life, power, ability, available items (weapons, guards, magics) and so on.

Meanwhile, where a plurality of game cards 30 are combined to enable playing one mini-game, the program for the mini-game is divided into a plurality. The divisional parts of the mini-game program and order data are recorded separately in the information recording areas 34 of the game cards 30. In this case, a plurality of mini-game programs may be previously prepared to provide different kinds of mini-games in accordance with the card kinds (the kind of monster based on water, fire, grass or the like of the card).

Furthermore, the recording to the information recording area 34 may be by properly combining a plurality of kinds of data. The data for determining a data amount (bytes) on each kind may be previously recorded in a header section to determine a data amount for each kind of the recorded data thereby reflecting upon an electronic game.

The game cards 30 are to be collected as collection cards (trading cards) owing to the allure of the figure printed on the illustration display area 32, and used in a game independently as a card game by use of the information recorded within the ability data recording area 43.

Incidentally, the below explanations will be by way of examples that the electronic game content is an imaginary monster capturing or raising game wherein the figures on the game cards 30 are monsters to appear in the electronic game.

The method for recording or so the individuality expressing data is to be considered, for example, by an optically readable recording scheme, an electrically readable storing scheme, a magnetically readable recording scheme and so on. The optical recording method uses, for example, printing with two-dimensional barcodes. The two-dimensional barcodes has a recording area formed by gathering together, in a scanning direction, unit blocks or lattices each having a predetermined area (e.g. 3 × 3 square mm), thereby distributing dots vertically and horizontally of each block. Furthermore, printing is made such that the dot distribution is varied in each column (or line) as divided at a constant interval in any of the vertical and horizontal directions. This makes it possible to record a great deal of data (e.g. approx. 100 bytes of data per one block). In the two-dimensional barcode recording scheme, in addition to the character identification codes and individuality expressing data to be inherently recorded, block Nos. are recorded as the data not to be used in game processing but to distinguish the data arrangement order in each block. This makes it possible to read the order of reading even in an arbitrary case where the information recording area 34 is formed in a reading (moving) direction of the game card 30 and/or in a plurality of locations in one card. By changing the arrangement of the data having been read out, the reading data is easy for use in an electronic game.

In the electrically storing method, the game card 30 is configured, for example, by an IC card. An data input/output terminal is formed in the vicinity of the IC formation, and individuality expressing data is previously written or stored on the non-volatile memory (ROM) within the IC. In this case, the ROM capacity within the IC is different depending upon the integration degree of the IC chip. When the capacity is insufficient only with the ROM, it is possible to use a writable/readable memory (RAM) within the IC chip. Also, in the magnetical recording method, magnetic stripes are formed in the information recording area 34 in order for magnetic recording onto the magnetic stripes by use of a magnetic head.

These recording methods, having merits and demerits, may be properly selected taking into consideration a use purpose and convenience. For example, the two-dimensional barcode is great in capacity and hence inexpensive but is to be lowered in reading accuracy upon deposit with dust or scribbling, resulting in impossibility to write to data. Thus, there is a defect that the data reader will be expensive in cost. The IC card is great in capacity, high in reading accuracy, possible to read at high speed and possible to write and read. The data reader/writer will be available at low cost. On the contrary, there is a defect that the cost of the IC card is expensive. With the magnetic stripe, writing and reading is possible with an in expensive structure but there is a disadvantage that the amount of information to be recorded is less and the data is readily broken by nearing a magnet. Accordingly, a proper recording form may be selected taken into consideration a use purpose, user age, purchase price of the game cartridge 30, etc.

The game information storage medium 40 is a game cartridge (hereinafter "cartridge") configured by incorporating within a case (not shown) a non-volatile memory or fixed storage memory (e.g. ROM) 41, a connector 42, a writable and readable memory (RAM) 43, a read-data processing circuit 44 and a data reader 45. The connector 42 is to electrically connect between the connector 22 of a game machine 20 and the cartridge 40, and uses an edge connector or the like forming a plurality of contacts in an end of a board. To the connector 42 are connected the ROM 41, the RAM 43 and the read-data processing circuit 44 through a bus. The read-data processing circuit 44 is connected with the data reader 45.

The ROM 41 includes, at least, a storage area storing a first program and a storage area storing a second program. The first program is an inherent game program for play independently on an electronic game, and different depending upon the content of a game. The second program is a program for providing a variation in the content of an electronic game by use of the individuality expressing data read out of the information recording area 34 of the game card 30. For example, the second program, if the individuality expressing data is letter data explaining the feature of a character, includes a program to display the letter data on a game screen. The second program, where the individuality expressing data is an item (weapon, magic or the like) for enhancing the ability of a character, includes a program to use that item in the inherent game. The second program, where the individuality expressing data recorded on the game card 30 is dot (or graphic or image) data of a character not included in the factors appearing in game software, includes as another example a program to represent dot (graphic) data of a character read out of the game card 40. The second program, where the individuality expressing data recorded on the game card 30 is the division of a mini-game program on part-data-unit basis, includes as another example a program that part of a program is arranged in a predetermined order to constitute mini-game program to control the execution of a mini-game.

The RAM 43 is a memory for temporarily storing a backup data changing with the progress of a game. This is backed up with a battery or the like (not shown) in order to prevent the data from being lost even upon removal from the game machine 20. In addition to or in place of the RAM 43, a flash memory (flash ROM) may be provided that does not require backup by a battery. The RAM 43 includes an area or table to store a plurality of kinds of ability data of a character correspondingly to the identification code of a captured (or collected) character. Also, the RAM 43 includes various storage areas such as an area to store the dot data of characters in a predetermined number, an area to store the text data of a predetermined number of characters and an area to store a program for a mini-game.

The data reader 45 is to mechanically read the individuality expressing data recorded in the information recording area 34 of the game card 30. This uses an optical reader where the individuality expressing data is recorded with the two-dimensional barcode. Where stored in an IC card, an IC-card reader is used. Where recorded on a magnetic stripe, a magnetic reader is used. The read-data processing circuit 44 is a circuit for processing the data read out by the data reader 45. This makes a proper processing depending upon the recording scheme thereby performs conversion into data form to be processed by the CPU 21.

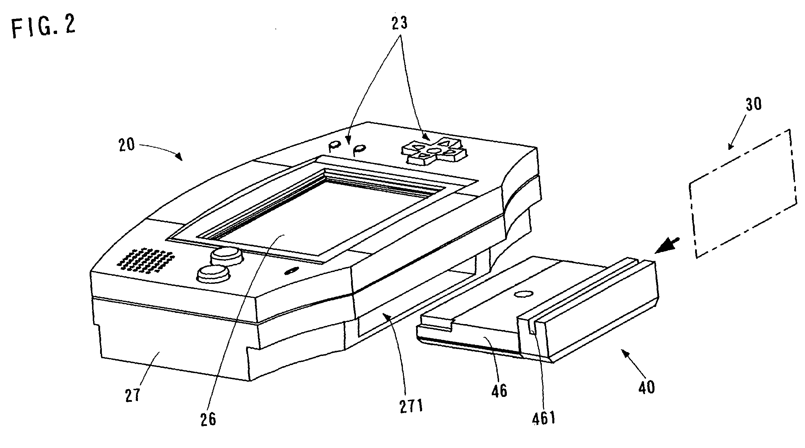

For example, where the individuality expressing data is recorded by a two-dimensional barcode, the data reader 45 includes a CCD (image) sensor and the cartridge 40 has a groove or guide part (461 in Figure 2) formed in a part of the case to restrict the movement of the game card 30. When the game card 30 is moved parallel, the CCD sensor dissolves the dot data of the two-dimensional barcode into a column unit and converts it into bit column data. This is repeated in order in the movement direction, thereby converting the two-dimensional (planer) data into one-dimensional (bit column) data. The read one-dimensional data is dissolved into 1-byte-unit-based data by the read-data processing circuit 44 such that it can be read to the RAM 43. This is further rearranged in the order of the block No. of the two-dimensional barcode and written to the RAM 43.

Next, explanation is made on the operation principle of the Figure 1 embodiment. First, explained is a case using independently a game machine. In this case, the cartridge 40 is received in the game machine 20 (connection is made between the connector 22 and the connector 42). When the power switch (not shown) is turned on, the CPU executes the game process on the basis of a first program stored in the ROM 41 thereby generating the display image data for displaying game images. At this time, if the player manipulates an operation section 23 and instructs a moving direction and/or action of a hero character to appear in the game, on the basis of which the CPU 21 changes the moving direction and/or action of the hero character according to the game program. On the LCD 26 is displayed game images according to a result of process by the CPU 21 as above.

Meanwhile, when an electronic game or video game is played by use of the game cards 30, the read-data processing circuit 44 and the data reader 45 are activated prior to play. When the player inputs an operation required for reading the data recorded in the information recording area 34 (e.g. parallel-moving the game card 30 in a proximate state to the data reader 45, for two-dimensional barcode recording), the data reader 45 reads out the data and supplies, in order, the read data to the read-data processing circuit 44. The read-data processing circuit 44 converts a format of the read data into a data format to be processed by the CPU 21 and supplies it to the CPU 21. The CPU 21 writes it to the RAM 43. The CPU 21 executes the inherent game program on the basis of the first program and executes the second program, thereby executing a process to provide variation in the inherent game program by using the individuality expressing data or read data stored in the RAM 43.

For example, where the individuality expressing data is data for improving the ability of a character, a process for enhancing the ability of the character is executed rather than the game processing based only on the first game program. Meanwhile, if the individuality expressing data is the explanatory text (text) data for explaining the feature of a character, the explanatory text thereof is displayed in association with the character. Thus, the player is known of information for advantageously using the characters in the course of the game (conquest way, hint, etc.). Where using a game card 30 recording the individuality expressing data of an especial character not previously stored in the ROM 41, the individuality expressing data is read and temporarily stored in the RAM 43. The CPU 21 uses the individuality expressing data of the especial character to display the dot data of the same character on the LCD 26, thereby executing a process of a game the same character appears (game varied by the inherent game).

Furthermore, where the individuality expressing data includes mini-game program data not included in the first program, data reading is made for a plurality of game cards 40. The read data is temporarily stored in the RAM 43 with a result that stored in the RAM 43 a series of programs for the mini-game recorded divisionally in the plurality of game cards 40. While executing the game process on the basis of the first program (or a combination of the first and second programs), the CPU 21 when a scene a mini-game is playable comes suspends the process based on the first program and executes the mini-game program stored in the RAM 43 to display the images of the mini-game on the LCD 26.

Next, a detailed embodiment is explained on a case that the game machine is a portable game machine 20 and the recording scheme to the information recording area 34 of the game card 30 is by optical recording with a two-dimensional barcode. Incidentally, the same or corresponding parts to those of the Figure 1 embodiment are denoted by the same reference numerals wherein the parts especially distinguished are shown by appending an alphabet to the end of the same reference numeral.

Figure 2 is an external view of an embodiment of the invention. In Figure 2, the portable game machine 20 has an operation part 23 and LCD 26 arranged on one main surface (surface in the Figure) of a flat-formed housing 27. The housing 27 has an insertion hole 271 formed in a back-surface upper portion thereof to receive therein a cartridge 40. On the other hand, the cartridge 40 includes housing 46 having an outer shape for insertion in the insertion hole 271. The housing 46 has a guide 461 formed exposed above as received in the portable game machine 20. The guide 461 has a groove for guiding the game card 30 in movement, and incorporates therein a data reader 45 including, for example, a CCD sensor (or charge coupled device) in order to read the data recorded in the information recording area 34.

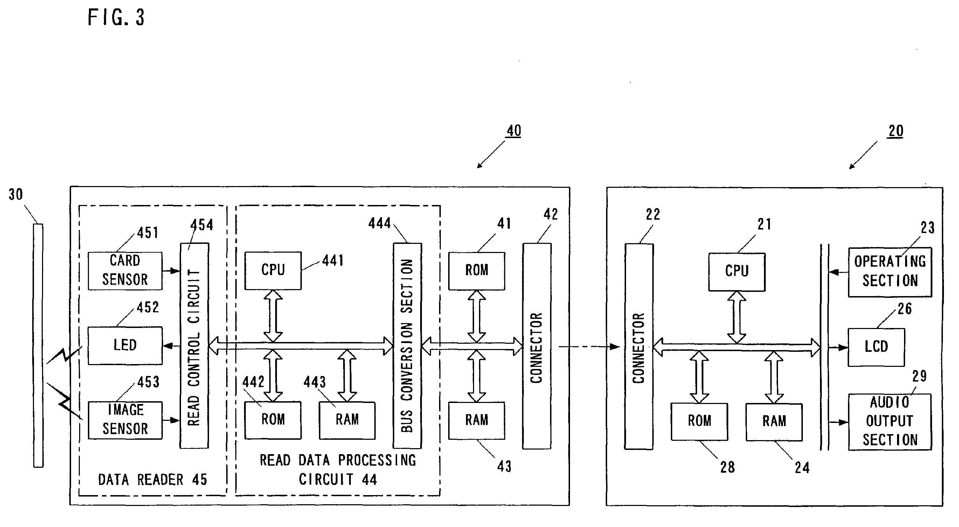

Figure 3 is a block diagram of an embodiment of the invention. In Figure 3, a portable game machine 20 includes a built-in ROM 28 and a sound output section 29, in addition to the circuit shown in Figure 1. The ROM 28 stores a program for processing at a start-up of the CPU and realizing, in a software fashion, the function of display drive circuit 25. The sound output section 29, when the CPU 21 supplies as digital data the sound effect or sound for a game stored in the ROM 41, converts the sound data into an analog sound signal to be outputted through a speaker (not shown).

The data reader 45 included in the cartridge 40 includes a card sensor 451, a light-emitting diode 452 or CCD sensor (or called also an image sensor) 453 and a read control circuit 454. The card sensor 451 detects a game period of between an insertion of the game card 30 at the tip in the guide 461 and an outing thereof at the rear end from the guide 261. In this duration, a pulse is generated so that the light-emitting diode 452, the CCD sensor 453 and the read control circuit 454 are activated by the same pulse. The light-emitting diode 453 makes light-emission display during the period of the pulse input from the card sensor 451, thereby illuminating the information recording area 34 of the game card 30. The CCD sensor 453 is to receive the reflection light of the light-emitting diode 452 and optically read the individuality expressing data recorded in the information recording area 34. This temporarily stores the dot pattern on a block unit of the two-dimensional barcode, and dissolves it into dot data of one line in the moving direction of the game card (or one line in a column direction orthogonal to the moving direction), and then converting it into bit series data and supplies same to the read control circuit 454. The read control circuit 454 converts the read data into data format suited for temporary storage within the RAM 443 hereinafter referred, and supplies it to the read-data processing circuit 44.

The read-data processing circuit 44 includes a CPU 441, a ROM 442, a RAM 443 and a bus converting section 444. The ROM 442 fixedly stores a program for conversion of the read data into a predetermined format, a program for controlling the writing to the RAM 443 and a program for controlling the transfer to the CPU 21 through the bus converting section 444. The CPU 441 writes the read data to the RAM 443 on a byte-unit basis and temporarily stores it on the basis of a program stored in the ROM 442. The data is read out in order, and the bus converting section 444 is caused to convert it into a data form in a predetermined format to be transferred to the portable game machine 20.

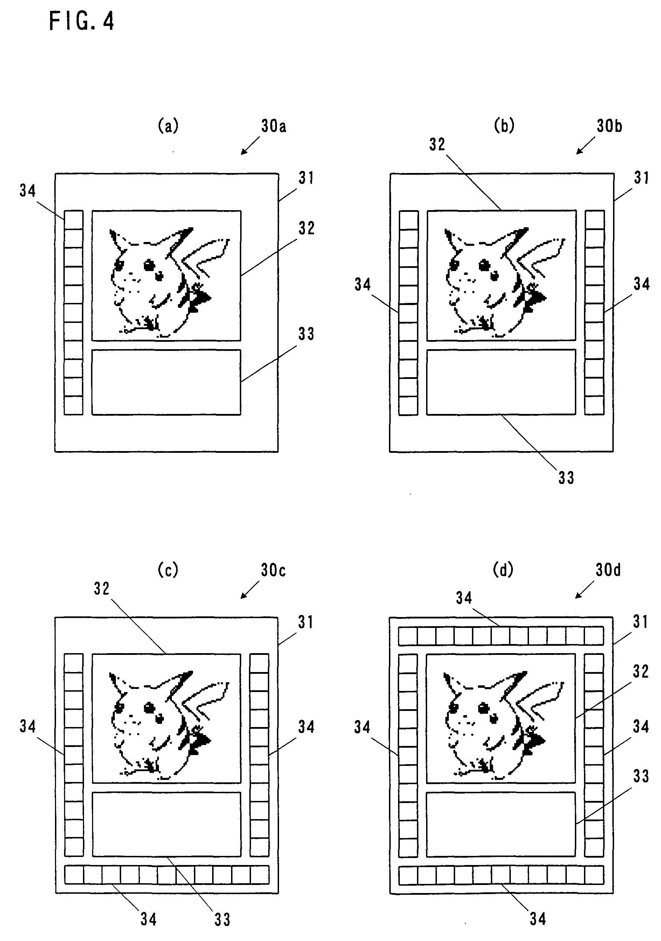

Figure 4 is a detailed plan view of an example of the game card, showing examples that the individuality expressing data is optically readably recorded. Particularly, a game card 30a shown in Figure 4(a) shows that one information recording area 34 is formed along one side. A game card 30b of Figure 4(b) shows that the information recording area 34 is divisionally formed along the opposite two sides (in two locations). A game card 30c of Figure 4(c) shows that the information recording area 34 is formed along the three sides of the card (in three locations). A game card 30d of Figure 4(d) shows that the information recording area 34 is formed along the four sides (in four locations). Each of the game cards 30a - 30d formed with one or a plurality of information recording areas 34 is recorded with a block No. in each block included in the information recording area 34 so that, even if there is a difference in reading direction and/or order, the read data out of each block can be rearranged according to the block No. order after reading out of all the blocks and used for game processing.

In this manner, the amount of information recorded can be increased by increasing the number of sides or locations forming the information recording area 34. As a result, there is an advantage that the content of an electronic game can be diversified the game cards 30.

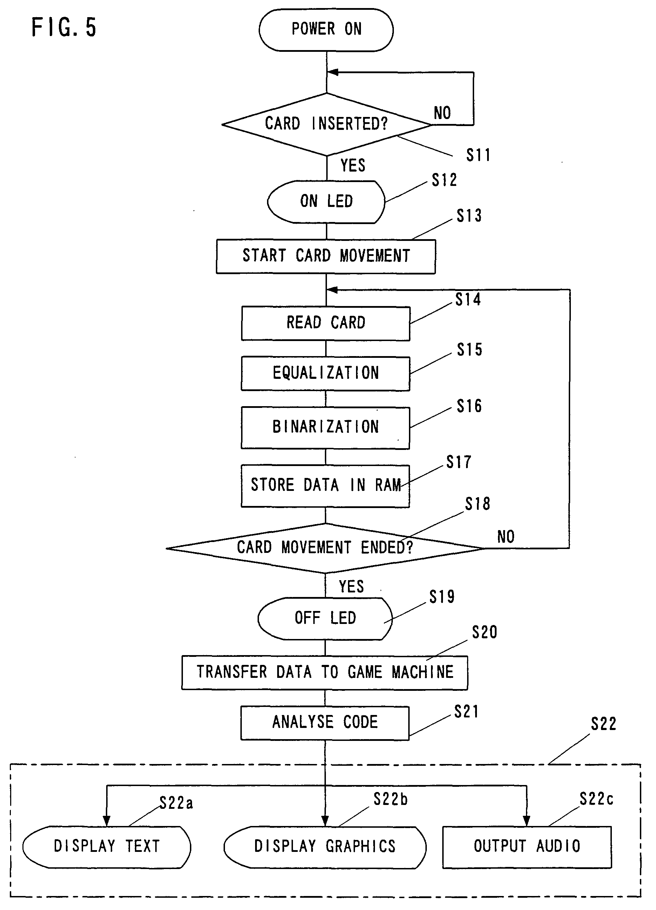

Figure 5 is a flowchart for explaining the operation of the card reader 45 and read-data processing circuit 44 (or the process by the CPU 441). When the power switch (not shown) to the portable game machine 20 is turned on, the CPU 441 starts the operation of Figure 5 on the basis of a program of the ROM 442. In step (shown with the symbol "S" in the Figure) 11, it is determined on the basis of an output of the card sensor 451 whether there is an insertion detection of a game card 30 or not. If there is no insertion detection, a detection is waited for the game card 30 by the card sensor 451. When a game card 30 is inserted in the guide 461, the card sensor 451 detects the game card 30. In response, the light-emitting diode (LCD) 452 in step12 is driven for lighting. In step13, the player starts to move the game card 30 along the guide 461 in a manner of moving it along a side forming the information recording area 44. In the following step14, the CCD sensor 453 optically reads the data recorded in the information recording area 34 by the two-dimensional barcode scheme. The data read by the CCD sensor 453 in step15 is equivalence-processed by the read control circuit 454. This data, in step 16, is converted into binary data of "1" or "0" on a dot-unit basis. In step 17, the CPU 441 converts the binary data on a column-unit basis into a predetermined format having one block of data column, and writes and stores it in the RAM 443. In step 18, it is determined whether the movement of the game card 30 has been completed or not. If the card sensor 451 is in a period for detecting the game card 30, the process returns to the step 14 to repeat the operation of the steps 14 - 18 until the game card 30 has not been detected. The operation of the steps 14 - 18 is repeated until all the block data recorded in the information recording area 34 has been read out.

If a completion of card movement is detected in the step S18, the process proceeds to step 19 to go off the light-emitting diode 451. The record data in the information recording area 34 of one game card 30 thus read out is temporarily stored in the RAM 443. In the following step 20, the record data of the one game card 30 stored in the RAM 443 is sequentially read out by the CPU 441 and transferred to the portable game machine through the bus conversion circuit 444 and connectors 42 and 22. At this time, the CPU 21 temporarily stores the read data transferred from the cartridge 40 into the RAM 24. In step 21, the CPU 441 analyzes the read data stored in the RAM 24.

Incidentally, where the information recording area 34 is formed along the opposite two sides (into locations) of the game card 30 as in Figure 4(b), or where formed along the three sides (in three locations) of the game card 30 as in Figure 4(c), or where formed along the four sides (in four locations) of the game card 30 as in Figure 4(d), the process of the steps 11 - 21 is carried out according to such number. Also, even if the direction and/or order of reading the game card 30a - 30d is different, because block Nos. are recorded in the blocks included in the information recording area 34, the read data out of the blocks can be rearranged in the order of the block No. after reading the blocks and temporarily stored to the RAM 443.

Thereafter, the CPU in step 22 carries out a process having a change the process based on the inherent game process according to the analyzed read data, on the basis of the analyzed read data temporarily stored in the RAM 24 and program stored in the ROM 41. The change-added process, if the data recorded in the information recording area 34 is for example text data, is a process for displaying read-out letters or text on the LCD 26 (step 22a). Also, where the data recorded in the information recording area 34 is graphic (or dot) data for displaying a character, the graphic data is displayed on the LCD 26 (step 22b). Furthermore, where the data recorded in the information recording area 34 is sound data such as cry of a monster, sound data is digital-analog (DA) converted and outputted as sound from the sound output section 29 (step 22c). Besides, various processes or operations are possible depending upon the kind of read data. The process or operation is determined depending on the record data in the information decoding area 34 and program in the ROM 41.

Incidentally, although various games are to be thought of as an electronic game using the data read out of the information recording area 34 of the game card 30 (or 30a-30d) or a combined game of game cards and an electronic game, an example of which is explained in detail below.

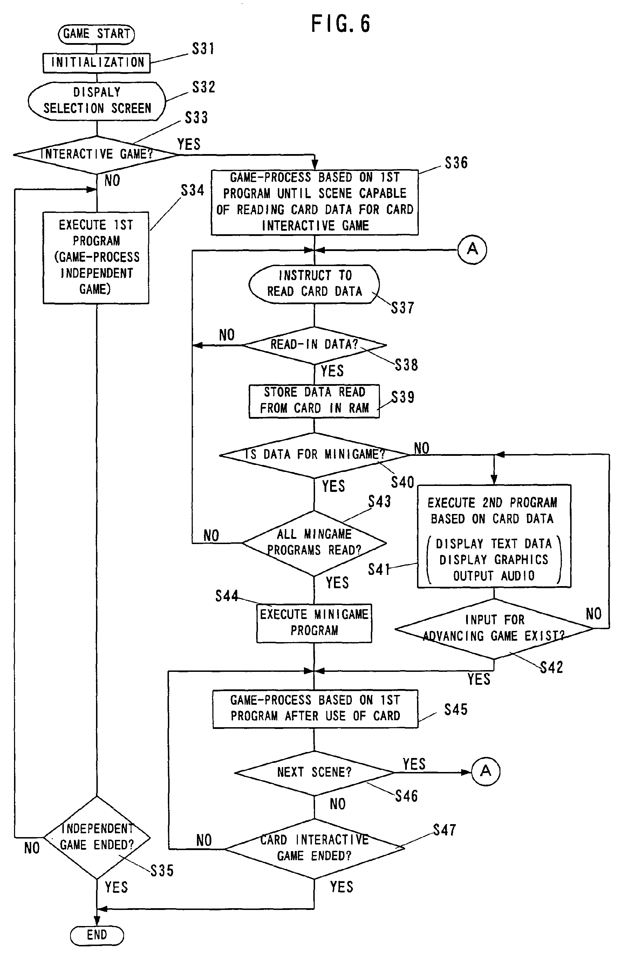

Figure 6 is a flowchart as an example of the game process. Referring to Figure 2 to Figure 6, explanation is made on the detailed operation of an electronic game using the game cards or a combined game of the game cards and the electronic game. Prior to game start, the player loads the cartridge 40 on the game machine 20 and then turns on the power switch (not shown). In response, the CPU 21 executes the below process on the basis of the program stored in the ROM 41. That is, in step 31 is performed an initialization process, e.g. initially clearing the RAM 24, transferring the backup data stored in the RAM 43 to the RAM 24, and so on. In step 32 is displayed a mode select screen at a start of the game. In this mode select screen, display is made for selecting any of the game mode with independently an electronic game not using the game cards 30 and a combined game of cards and an electronic game using the game cards 30. In the following step 33, it is determined whether selected a combination game with the game cards 30 or not. In the case that a game mode with independently an electronic game not using the game cards 30 has been selected is determined, the process advances to step 34 to process the first program stored in the ROM 41 (program for an electronic game single game or usual game) thereby carrying out image display and sound output on the basis of the process. This process is similar to the conventional portable game and hence detailed explanation is omitted herein. Then, it is determined in step 35 whether the usual game has ended or not. If not ended is determined, the process returns to step 34, repeating the operation of the step 34 and step 35.

On the other hand, if it is determined in the step 33 that a combined game has been selected, the process proceeds to step 36. In the step 36, a game process before the scene the game combined with the game cards 30 is to be executed within the first program stored in the ROM 41. In step 37, on the LCD 26 is displayed a message instructing an operation for reading out the data recorded in the information recording area 34 of the game card 30 (e.g. "Let Card Data Read", etc.). It is determined in step 38 whether the card data has been read out or not. This determination is made by determining whether or not various ones of data, such as the individuality expressing data read out of the information recording data 34 of the game card 30, is temporarily stored in the RAM 443. If it is determined that the card data has not been read, the process returns to the step S37 to wait for the player to make an operation for reading data of the game card 30. If the card data has been read is determined, then in step 39 the read data from the card is transferred from the RAM 443 to the RAM 24 where it is stored (or temporarily stored).

In step 40, it is determined whether the card-read data stored in the RAM 24 is a part of a mini-game program for enabling a mini-game or not. If not a mini-game program is determined, the process proceeds to step 41 to execute game process added with the card-read data on the basis of the second program (i.e. process for realizing a game added with variation by use of the game card 30 to the game with independently the electronic game based on the first program). For example, where the read data is text data of an explanatory text explaining the feature of a character depicted in the illustration display area 32 or a translation text thereof, the text data read out of the card is displayed on the LCD 26 associatedly with the image data corresponding to the character. Also, where the read data is graphic data of a character depicted in the illustration display area 32, an image of the character based on the graphic data is displayed on the LCD 26. In this case, if character codes, character names, character ability data, etc. are previously recorded in addition to the graphic data in the information recording area 34 of the game card 30 as required, such character code, character name or ability data will be displayed together with the graphic data. Furthermore, where the read data is sound data of a character depicted in the illustration display area 32 (cry or speech voice), the sound output section 29 outputs sound based on the sound data together with the display of the graphic data of the character. In this case, the displaying of graphic data can be realized by reading from the ROM 41 through designation of an reading address on the ROM 41, on the basis of the character code read out of the card. More preferably, the character graphic may be displayed in an animation fashion in a manner the character cries or speaks in association with the generation of sound of cry or speech. Furthermore, when the character identification data having been read is under a predetermined condition (e.g. not a character identification code registered in the RAM 43), the character identification code is registered and one or two or more of data of the after-read text data, graphic data, sound data and text data corresponding to the character are registered. In the following step 42, it is determined whether there is a game advancing instruction or not. If there is no instruction, the operation of the step 41 is continued. When the player operates any of the switches in the operation part to instruct for advancing the game, this instruction is determined in step 42 and the process proceeds to step 45 hereinafter referred.

In this manner, a combined game of the game cards 30 and the electronic game added with the data read out of the game cards 30 is realized differently from a game with independently an electronic game. As a result, by merely adding in kind a game card 30, a variety of game plays are feasible in compliance with the kinds of the game cards 30 even for a game using the same cartridge 40, thus providing the merit of realizing an interesting game system free of getting tired.

If it is determined in the above step 40 that the read data is a part of a mini-game program, the process proceeds to step 43. In the step 43, it is determined whether all the programs for the mini-game have been read or not. As mentioned before, the mini-game program is divided into proper bytes and recorded separately in the information recording areas 44 of the game cards 30. In such a case, divisional-program sequence data and total byte data are added as a header so that the divided programs can be rearranged to the former arrangement after once reading out. For this reason, each time part of the mini-game program is read out of one game card 30, it is rearranged according to the order data and stored in the RAM 24. Accordingly, the CPU 24 determines whether the divisional programs stored in the RAM 24 reaches the total bytes or not, thereby determining whether all the mini-game program has been read out or not. If the all has been read out is determined, in step 44 the mini-game program stored in the RAM 24 is executed thereby enabling mini-game play.

In this manner, if the mini-game program is divisionally recorded onto the game cards 30, it is possible to increase the mini-game kinds by adding the kinds of game cards 30. Thus, there is an advantage that the mini-game kinds can be added one after another after the cartridge 40 is purchased. Moreover, the user is heightened will in collecting the game cards 30 according the mini-game program and allowed to experience various plays with the use of the common cartridge 40.

Completing the mini-game, in the following step 45 the following game (electronic game not using the game cards 30) process will be executed using the game cards 30 on the basis of the first program. In step 46, it is determined whether reached is a scene allowing a combined game with the next game card 30 or not. If the scene is not reached is determined, it is determined in step 47 whether a game-card combined game has been ended or not. If determined not ended, the process returned to step 45 to repeat the process of the steps 45, 46 and 47. At that time, if it is determined in the step 46 that the scene is reached, the process returned to the step 37 to repeat the process of the steps 37 - 46. At that time, if it is determined in the step 47 that the game-card combined game has been ended, then the game is ended.

Although in the above embodiment explanation was on the portable game machine having an LCD as one example of a game machine, the technical idea of the invention is not limited to such structure but applicable to the games using a video game machine or personal computer. In such a case, the storage data on the ROM 41 of the cartridge 40 is stored to an information storage medium for a video game machine, e.g. memory cartridge, magnetic disk, CD-ROM, or DVD (digital versatile disk) or the like. The data reader 45 and the read-data processing circuit will be connected integrally with or externally from the video game machine or personal computer.

Also, the above embodiment explained the example of an electronic game content to capture/raise/collect the monsters, it is pointed out that the technical idea of the invention is not limited to the game explained in embodiment but applicable to an arbitrary game provided that the game is an combination of game cards and an electronic game.

Incidentally, the character identification code is not limited to one in the number per character. Where there exist a plurality of kinds of cards that are identical between the characters but different in individuality expressing data, identification data in plurality may be provided per character.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A game system using game cards including a plurality of game cards each visually recognizably printed with a character figure and ability data and to be used for a card game, a game information storage medium storing a game program to appear at least part of the characters in the game cards, and a game machine including processing means for receiving therein the game information storage medium to execute an image display game, the game system using game cards **characterized in that**:
said plurality of game cards mechanically readably records or stores, for each of the characters depicted with figures, at least identification codes of the characters and individuality expressing data for expressing an individuality of the character;
any one of said game information storage medium and said game machine being further provided with external information reading means for reading the identification data and individuality expressing data of the character recorded or stored in said game card; and
said processing means, when supplied with the identification code and individuality expressing data read by said external information reading means, adding the individuality expressing data to the game program stored in said game information storage medium thereby executing a game process.

2. A game system according to claim 1, wherein said processing means, when not supplied with the identification code and individuality expressing data by said external information reading means, executes a process of the game program on the basis of only the game program stored in said game information storage medium thereby executing a different game process depending upon using or not using said game card on said game machine.

3. A game system according to claim 1 or 2, wherein said game information storage medium includes, for each of the characters, a fixing storage section fixedly storing the identification codes of the characters and individuality expressing data of the characters, and a writing/reading storage section that writably/readably stores an identification code and individuality expressing data of a character acquired upon progress of the game and
said fixing storage section storing a registering program for writing and registering when the identification code of the character read by said external information reading means is under a predetermined condition, the identification code and individuality expressing data of the character read from the game card to said writing/reading storage section.

4. A game system according to claim 1 or 2, wherein said game information storage medium includes, for each of the plurality of characters, a fixing storage section for fixedly storing the identification code and individuality expressing data of the character, and a writing/reading storage section for writably/readably storing the identification code and individuality expressing data of the character acquired upon progress of the game,
said plurality of game cards mechanically readable recording, as individuality expressing data, additional data in addition to inherent individuality expressing data corresponding to the identification code of one or a plurality of the characters, and
said fixing storage section further storing, when the identification code of the character read by said external information reading means is under a predetermined condition, a program for registering additional data read out of the game card in addition to the individuality expressing data corresponding to the identification code of the character.

5. A game system according to claim 1, wherein said game information storage medium includes an fixing storage section fixedly storing, for each of the characters, identification codes and individuality expressing data of the characters and a writing/reading storage section writably/readably storing the identification code and individuality expressing data of the character acquired upon progress of the game,
said plurality of game cards recording inherent ability data as character individuality expressing data for each of the character identification codes,
at least one of said plurality of game cards being printed with a figure of a particular character other than the characters stored in said game information storage medium, and mechanically readably recording display data for displaying an identification code, ability data and figure of the particular character and
said fixing storage section, when the identification code of the particular character read by said external information reading means is different from the identification codes of all the characters previously registered, further storing a program for registering an identification code, ability data thereof and display data of the particular character to said writing/reading storage section.

6. A game system according to any of claims 1 to 5, wherein the individuality expressing data of the character recorded in said game card is ability data of the character, and
said game information storage medium including a game program for comparing the ability data stored in association with the character identification data in the game program corresponding to the identification data of a certain character read from said game card with the read character ability data, to advance the game by use of the ability data in the game program when the ability data in the game program is higher and advance the game by using the read ability data when the read character ability data is higher.

7. A game system according to any of claims 1 to 6, wherein said game cards are trading cards each depicted, in one surface, with a figure of the character different in rarity value, and
said game machine using said collection card to play a game associatedly with the inherent game stored in said game information storage medium.

8. A game system according to any of claims 1 to 6, wherein the individuality expressing data recorded in said game card includes sound data related to at least the character, and
said processing means generating sound of the character on the basis of sound data read by said external information reading means.

9. A game system according to any of claims 1 to 8, wherein the individuality expressing data recorded in said game card includes text data explaining an individual feature of the character, and
said processing means displaying text data read by said external information reading means on a game screen.

10. A game system according to any of claims 1 to 9, wherein said game card optically readably records by a two-dimensional barcode scheme at least the identification data and individuality expressing data of the character in a mechanically readable recording form, and
said external information reading means being an optical reader for optically reading the identification data and individuality expressing data of the character recorded in said game card by the two-dimensional barcode scheme.

11. A game system according to any of claims 1 to 9, wherein said game card electrically readably recording at least character identification data and individuality expressing data of the character in a mechanically readably recording form in a non-volatile memory of an IC card, and
said external information reading means being a reader for electrically reading the identification data and individuality expressing data of the character stored in said non-volatile memory of said game card.

12. A game system according to any of claims 1 to 9, wherein said game card magnetically records at least character identification data and individuality expressing data of the character in a mechanically readable recording form in a magnetic recording area formed in one surface thereof, and
said external information reading means being a magnetic reader for magnetically reading the identification data and individuality expressing data of the character recorded in the magnetic recording area of said game card.

13. A game system including a plurality of collection cards respectively printed with figures and ability data of characters, a game information storage medium storing a game program to appear at least part of the characters of said collection cards in an image display game, and a game machine including processing means for receiving therein said game information storage medium to execute an image display game, **characterized in that**:
at least one of said collection cards are printed with a particular character other than the character stored in said game information storage medium and mechanically readably recording display data to display a figure of the particular character in addition to an identification code of the particular character and individuality expressing data of the particular character,
any one of said game information storage medium and said game machine further having external information reading means for reading the identification data and individuality expressing data recorded in said collection card,
said processing means
executing the game program on the basis of only the game program stored in said game information storage medium when the identification code and individuality expressing data of the particular character are not supplied by said external information reading means, and
executing a game process on the basis of data having the individuality expressing data of the particular character added to the game program stored in said game information storage medium when supplied with the identification code and individuality expressing data of the particular character read from said external information reading means read out of the external information reading means, and executing a process to display the display data of the particular character during the game.

14. A game system according to claim 13, wherein said game card mechanically readably stores sound data as individuality expressing data related at least to the character, and
said processing means generating sound of the character on the basis of the sound data read by said external information reading means.

15. A game system according to claim 13, wherein said game card mechanically readably records or stores, as individuality expressing data, ability data related at least to the character, and
said processing means changing a display state of the character in the game on the basis of ability data read by said external information reading means.

16. Game cards for use in a game system including a game information storage medium storing a game program to appear characters depicted at least part of a plurality of game cards in an image display game, a game machine including processing means for receiving therein said game information storage medium to execute an image display game, and an external information reading means provided on any one of said game information storage medium and said game machine and for reading data recorded in said game card, **characterized in that**:
said plurality of game cards,
are to play a card game using each card and each printed, on one surface, with a figure of the character and ability data,
mechanically readably recording at least identification codes of the characters and individuality expressing data for expressing individualities of the characters on card-by-card basis depicted with the figures of different characters, and
are to be read of the individuality expressing data by said external information reading means and used in a game on said game machine.

17. Game cards according to claim 16, wherein said game cards records additional data in addition to the individuality expressing data, and
the additional data including mini-game data for realizing a game added to the game based on the game program stored in said game information storage medium.

18. Game cards according to claim 17, wherein the mini-game data recorded in said game cards divisionally records a mini-game program for realizing a mini-game in said game cards separately from the game program stored in said game information storage medium, and
each of said game cards further recording order data for rearranging part of divided ones of the mini-game program.

19. Game cards according to claim 16, wherein the individuality expressing data recorded in each of said game cards includes at least sound data to generate sound of the character and ability data of the character, and
each of said game cards further recording, as additional data, capacity data to determine a capacity of the sound data and ability data thereby enabling to divisionally record respective ones of the sound data and ability data.

20. Game cards according to claim 16, wherein the individuality expressing data recorded in each of said game cards includes at least two kinds of data of sound data for generating sound of the character, ability data representative of an ability of the character and text data explaining a feature of the character, and
each of said game cards further recording capacity data to determine a capacity of said at least two kinds of data thereby enabling to set capacities of the two kinds of data to respective values different on a card-by-card basis.

21. Game cards according to claim 16, wherein each of said game cards records further additional data corresponding to the identification code of the figure-depicted character and data for determining a capacity of the individuality expressing data and additional data thereby enabling to divisionally record respective ones of the individuality expressing data and additional data.

22. Game cards according to any of claims 16 to 21, wherein said external information reading means is an optical reader for optically reading the identification data and individuality expressing data of the character recorded in said game card, and
said game card optically readably recording at least the identification data and individuality expressing data of the character in a mechanically readable recording form by a two-dimensional barcode scheme.

23. Game cards according to any of claims 16 to 21, said external information reading means is a reader for electrically reading the identification data and individuality expressing data of the character stored in a non-volatile memory of said game card, and
said game card electrically readably recording at least the identification data and individuality expressing data of the character in a mechanically readable recording form in said non-volatile memory of an IC card.

24. Game cards according to any of claims 16 to 21, wherein said external information reading means is a magnetic reader for magnetically reading the identification data and individuality expressing data of the character recorded in a magnetic memory of said game card, and
said game card magnetically recording at least the identification data and individuality expressing data of the character in a mechanically readable recording form in said magnetic memory formed in one surface thereof.

25. A game information storage medium for use in a game system including a plurality of game cards each visually recognizably printed with a figure and ability data of a character and for playing a card game using each card, an game information storage medium storing a game program, a game machine including processing means for receiving therein said game information storage medium to execute an image display game, and external information reading means provided on any of said game information storage medium and said game machine to read data recorded in said game card, **characterized in that**:
said plurality of game cards mechanically readably record on a character-by-character basis at least identification codes of the characters and individuality expressing data for representing individualities of the characters depicted with figures,
said game information storage medium storing
a first program for executing a game to appear characters depicted at least in part of said game cards in the image display game thereby playing an image display game different from a game by said game card, and
a second game program for executing a game added of individuality expressing data to the first game program when supplied with the identification code and individuality expressing data read from said external information reading means.

26. A game information storage medium according to claim 25, wherein said information storage medium is an cartridge including a semiconductor memory fixedly storing the first program and second program, and a case accommodating said semiconductor memory and integrally formed with said external information reading means.

27. A game information storage medium according to claim 25, wherein said game cards record or store a plurality of kinds of data as individuality expressing data on an identification-code-by-identification-code basis, and
said game information storage medium including a semiconductor solid memory fixedly storing the first program and second program, a writable/readable memory for writably/readably storing at least part of the individuality expressing data correspondingly to at least part of the identification codes, and a case accommodating said semiconductor memory and writable/readable memory and integrally formed with said external information reading means.
